Europäisches Patentamt

European Patent Office

Office européen des brevets

(19)

(11) Veröffentlichungsnummer: **0 100 945**
**B1**

(12) **EUROPÄISCHE PATENTSCHRIFT**

(45) Veröffentlichungstag der Patentschrift:
28.01.87

(51) Int. Cl.⁴: **B 29 C 47/10**

(21) Anmeldenummer: **83107225.1**

(22) Anmeldetag: **22.07.83**

(54) Trichterstück einer Einschneckenstrangpresse.

(30) Priorität: **22.07.82 DE 3227443**

(43) Veröffentlichungstag der Anmeldung:
**22.02.84 Patentblatt 84/8**

(45) Bekanntmachung des Hinweises auf die Patenterteilung:
**28.01.87 Patentblatt 87/5**

(84) Benannte Vertragsstaaten:
**CH FR GB IT LI**

(56) Entgegenhaltungen:
**DE - A - 2 514 307**
**DE - B - 1 003 947**
**DE - C - 969 585**
**US - A - 3 101 511**
**US - A - 3 954 366**
**US - A - 4 171 196**

(73) Patentinhaber: **Windmöller & Hölscher,**
**Münsterstrasse 48-52, D-4540 Lengerich i.W. (DE)**

(72) Erfinder: **Upmeier, Hartmut, Dipl.-Ing., Jahnstrasse 25,**
**D-4540 Lengerich (DE)**
Erfinder: **Schreiber, Thilo, Am Schnaat 6,**
**D-4540 Lengerich (DE)**

(74) Vertreter: **Lorenz, Eduard et al, Rechtsanwälte Lorenz,**
**Eduard - Seidler, Bernhard Seidler, Margrit - Gossel,**
**Hans-K. Philipps, Ina, Dr. Widenmayerstrasse 23,**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Trichterstück einer Einschneckenstrangpresse mit einem Gehäuse und einer dieses in axialer Richtung zumindest teilweise durchsetzenden Förderschnecke, die zur antreibenden Getriebswelle hin durch ein von einer gehäusefesten Buchse abgedecktes Rückfördergewinde abgedichtet ist, mit einer die Förderschnecke umfassenden Nutbüchse mit achsparallelen, in Förderrichtung flacher werdenden Einzugsnuten und mit einer zur Förderschnecke tangentialen, aussermittigen Einfüllöffnung.

Aus der DE-B-1 003 947 ist es bekannt, den Innenmantel des die Förderschnecke umfassenden Gehäuses in seinem in Förderrichtung der Einfüllöffnung folgenden Bereich mit Längsnuten zu versehen, um dadurch einem radialen Gleiten des zu verarbeitenden Gutes entgegenzuwirken.

Weiterhin ist es bekannt, die Einzugszone im Bereich des Trichterstücks des zylindrischen Extrudergehäuses mit einer sogenannten Nutbüchse auszustatten, die über eine bestimmte axiale Länge mit achsparallelen, in ihrer Tiefe stetig abnehmenden und flach in die zylindrische Bohrung des Gehäuses auslaufenden Einzugsnuten zu versehen, die das Mitdrehen des Granulats unterbinden und dadurch die Förderleistung der Schnekkenstrangpresse erhöhen. Genauere Untersuchungen haben gezeigt, dass sich je Umdrehung der Schnecke Drehmoment- bzw. Druckschwankungen in der thermoplastischen Masse in einer Grössenordnung von ± 2% ergeben, die die Längstoleranzen des Strangproduktes beeinflussen und sich nachteilig bemerkbar machen. Die sich periodisch je Umdrehung der Förderschnecke einstellenden Druck- und Förderstösse werden durch den Durchlauf des Förderstegesüber die vordere Kante der Einfüllöffnung verursacht.

Trichterstücke mit einer zur Förderschnecke tangentialen, aussermittigen Einfüllöffnung sind beispielsweise aus der den Stand der Technik gemäss dem Obergbegriff des Patentanspruches 1 darstellenden US-A 3 101 511 bekannt und dienen der Verbesserung der Granulatzuführung. Durch die tangentiale aussermittige Öffnung entspricht die Breite dieser Öffnung nur etwa dem halben Durchmesser der Förderschnecke. Um dennoch eine ausreichende Füllung bei hohen Schneckendrehzahlen zu erreichen, wurde die axiale Länge der tangentialen Öffnung bis auf 2,5 D (D = Durchmesser der Förderschnecke) ausgedehnt. Bei dem bekannten Trichterstück erstreckt sich die auf ihrer inneren Wandung mit gleichmässig über den Umfang verteilten Einzugsnuten versehene Nutbüchse über den Bereich der Einfüllöffnung und ist mit einem dem Öffnungsquerschnitt der Einfüllöffnung entsprechenden Durchbruch versehen. Auch bei Trichterstücken mit aussermittiger tangentialer Einfüllöffnung der bekannten Art ergeben sich noch immer periodisch je Schneckenumdrehung druckerhöhende Förderstösse.

Aufgabe der Erfindung ist es daher, ein Trichterstück der eingangs angegebenen Art zu schaffen, das eine Aufgabe der thermoplastischen Massen unter Verringerung der Drehmoment- und Druckschwankungen gestattet.

Erfindungsgemäss wird diese Aufgabe dadurch gelöst, dass die Nutbüchse nur in ihrem in Förderrichtung der Einfüllöffnung folgenden Bereich über ihren gesamten Umfang mit Einzugsnuten und im Bereich der Einfüllöffnung nur über einen Umfangsteil mit Einzugsnuten versehen ist, der nicht unterhalb der Einfüllöffnung liegt. Bei dem erfindungsgemässen Trichterstück sind die Einzugsnuten, die sich in dem nicht unterhalb der Einfüllöffnung liegenden Umfangsteil der Nutbüchse befinden, bis in den Bereich des Rückfördergewindes ausgeführt, während der Umfangsteil der Nutbüchse, der sich unterhalb der Einfüllöffnung befindet, keine Einzugsnuten aufweist. Durch diese Ausgestaltung kann das aufgegebene thermoplastische Kunststoffgranulat bzw. -pulver unterhalb der Einfüllöffnung den Schneckengang ungehindert über den halben Schneckenumfang füllen, bevor die Nuten zur Wirkung kommen und die Abförderung des zugeführten Materials in axialer Richtung unterstützen. Das zugeführte Material wird auf diese Weise vorkomprimiert und füllt anschliessend in Förderrichtung vor der Einfüllöffnung alle Einzugsnuten aus, so dass sich zusammenwirkend mit den Schneckenstegen ein hoher Granulatdruck aufbauen und eine hohe Förderrate bei vergleichmässiger Förderung erzielen lässt. Das erfindungsgemässe Trichterstück führt somit zu einer Vergleichmässigung der Förderung bei hoher Förderleistung.

Eine Ausgestaltung der Erfindung ergibt sich aus Anspruch 2.

Nach einer weiteren erfinderischen Ausgestaltung lässt sich eine weitere Glättung und Vergleichmässigung des Förderverhaltens und damit auch des Drehmomentverlaufs dadurch erreichen, dass die Förderschnecke über den Bereich der flach auslaufenden Einzugsnuten mindestens mit drei Förderstegen versehen ist. Da bei dem Einzug des Kunststoffmaterials durch eine mehrgängige Schnecke höherfrequente Druck- und Förderstösse geringerer Amplitude entstehen, die an sich schon weniger störend sind als die periodischen Förderstösse je Umdrehung der Förderschnecke mit grösserer Amplitude, lässt sich durch die Mehrgängigkeit der Förderschnecke eine weitere Vergleichmässigung des Förderverhaltens erreichen.

Um das Stegvolumen im mehrstegigen Bereich der Förderschnecke zu kompensieren, ist in weiterer Ausgestaltung der Erfindung vorgesehen, dass die Breite der Förderstege im mehrstegigen Bereich etwa nur die Hälfte der Breite des Förderstegesim einstegigen Bereich der Förderschnecke beträgt. Weiterhin kann die Steigung der Förderstege in dem mehrstegigen Bereich der Förderschnecke grösser sein als die des Förderstegesin deren einstegigen Bereich, so dass auch durch diese Massnahme eine gleiche Förderrate in beiden Stegbereichen aufrechterhalten werden kann.

Bei den bekannten Nutbüchsen mit gleichmässig über ihren Umfang verteilten und sich im wesentlichen über ihre gesamte Länge erstreckenden Einzugsnuten wurde ein erheblicher Verschleiss an der Förderschnecke, an der Einfüllöffnung und an dem Einlaufbereich in die Zylinderbohrung festgestellt, die durch die abrasive Wirkung der dem noch nicht angeschmolzenen Granulat zugesetzten Füllstoffe verursacht wurde. Auch dieser abrasive Verschleiss lässt sich durch die erfindungsgemässe Ausgestaltung des Trichterstücks wesentlich vermindern.

In dem einstegigen Bereich weist der Fördersteg der Förderschnecke zweckmässigerweise eine Steigung von H = 1D auf, entsprechend einem Neigungswinkel von 17,4° zur Schneckenachse. Grössere Steigungen können eine instabile Förderung bewirken, während kleinere Steigungen eine grössere Verweilzeit der Schmelze in der Förderschnecke und damit eine unerwünschte Steigerung der Schmelztemperatur durch unnötige Umsetzung von Antriebsenergie in Schmelzwärme zur Folge haben. In dem mehrgängigen Bereich beträgt die Steigung der Förderstege zweckmässigerweise H = 1,1D.

Ein Ausführungsbeispiel der Erfindung wird nachstehend anhand der Zeichnung näher erläutert. In dieser zeigt

Fig. 1 einen Längsschnitt durch das Trichterstück,

Fig. 2 eine Draufsicht auf die aussermittige, tangentiale Einfüllöffnung in Blickrichtung II in Fig. 1 und

Fig. 3 einen Querschnitt durch das Trichterstück längs der Linie III–III in Fig. 1.

In der zylindrischen Bohrung des Gehäuses 1 ist die Förderschnecke 2 gelagert. Mit dem zylindrischen Gehäuse 1 ist das Gehäuseteil 3 des Trichterstücks verschraubt, das mit der zur Förderschnecke 2 tangentialen, aussermittigen Einfüllöffnung 4 versehen ist. Auf die Einfüllöffnung 4 ist der Einfülltrichter 5 aufgesetzt. Mit dem mit der Einfüllöffnung 4 versehenen Gehäuseteil 3 ist das Getriebe 6 verbunden, dessen Ausgangswelle mit dem Schaft 7 der Förderschnecke 2 verbunden ist und diese in Richtung des Pfeils A antreibt.

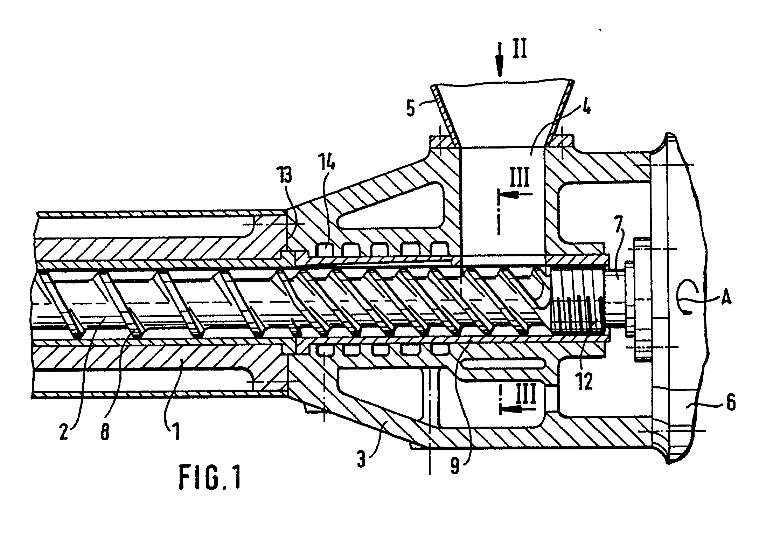

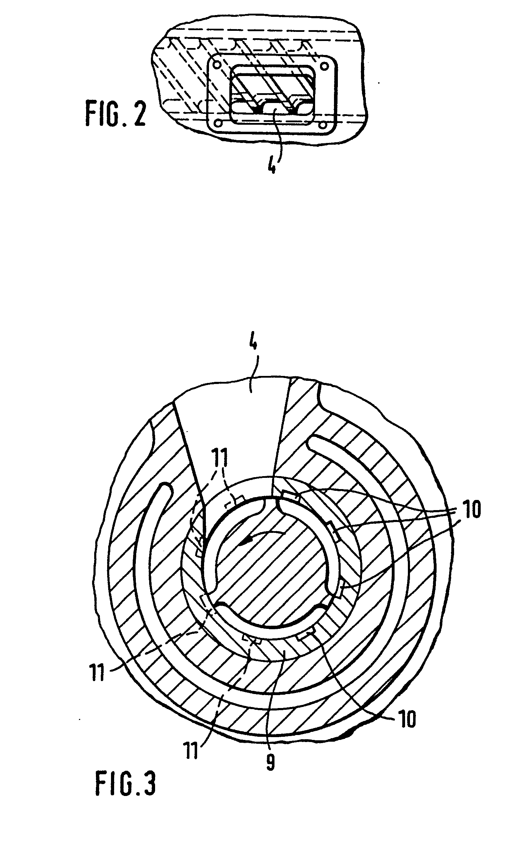

Die Förderschnecke 2 weist im Bereich der glattwandigen Bohrung in dem Gehäuse 1 nur einen Fördersteg 8 auf. In dem Gehäuse 3 des Trichterstücks ist in einer axialen Bohrung die Nutbuchse 9 gehaltert, die, wie am besten aus Fig. 3 ersichtlich ist, auf ihrer rechten Durchmesserseite, die etwa radial dem Bereich der Einfüllöffnung 4 gegenüberliegt, im wesentlichen über ihre gesamte Länge mit Einzugsnuten 10 versehen ist. Auf der gegenüberliegenden, dem Einfüllbereich entsprechenden Durchmesserbereich ist die Nutbüchse 9 mit Einzugsnuten 11 versehen, die, wie aus Fig. 1 ersichtlich ist, vor der Einfüllöffnung 4 enden und endseitig geschlossen sind. Die Einzugsnuten 10 enden im Bereich des Rückfördergewindes 12, so dass die Schnecke durch das Rückfördergewinde 12 gegen den glatten Bereich der Nutbüchse 9 abgedichtet ist.

Die Verbindungsfuge 13 zwischen dem beheizten Gehäuse 1 und dem gekühlten Gehäuse 3 des Trichterstücks ist durch bekannte Massnahmen wärmeisoliert. Das Gehäuse 1 ist mit bekannten und daher nicht dargestellten Heiz- und Kühlelementen versehen.

In dem Gehäuse 3 des Trichterstücks ist die Nutbüchse 9 von Kühlkanälen 14 umgeben, die mit Anschlüssen zum Zuführen und Ableiten von Kühlwasser versehen sind.

Im Bereich der Nutbüchse 3 ist die Förderschnecke 2 mit drei eingängigen Förderstegen 8 fortgesetzt. Im Bereich der Mehrgängigkeit weisen die Förderstege eine geringere Breite auf.

Im Bereich der aussermittigen tangentialen Einfüllöffnung 4 enden die achsparallelen Einzugsnuten 11 der Nutbüchse 9 kurz vor dem vorderen Ende der Einfüllöffnung. Im Bereich der Einfüllöffnung 4 weist die innere Zylinderwandung der Nutbüchse 9 keine Einzugsnuten auf und ist völlig glatt. In ihrem der Einfüllöffnung gegenüberliegenden Bereich ist die Nutbüchse 9 bis in den Bereich des Rückfördergewindes 12 hinein mit axialen Einzugsnuten 10 versehen. Das in die Einfüllöffnung 4 eingefüllte Granulat bzw. Pulver kann im Bereich der Einfüllöffnung die Schneckengänge über den halben Schneckenumfang füllen, bevor anschliessend die bis in den Bereich des Rückfördergewindes 12 reichenden Einzugsnuten 10 zur Wirkung kommen und das Material in axialer Richtung abfördern. Das auf diese Weise vorkomprimierte Material füllt anschliessend sämtliche Einzugsnuten 10, 11 aus, so dass sich der gewünschte hohe Granulatdruck aufbauen kann und eine hohe Förderleistung sichergestellt ist.

Durch die beschriebene Ausbildung der Nutbüchse ergibt sich unterhalb der Einfüllöffnung 4 eine derart vollständige Füllung der Förderschnecke, dass die axiale Länge der Einfüllöffnung 4 mit etwa 1D ausreichend bemessen ist.

Die Mehrgängigkeit der Förderschnecke 2 im Bereich der Nutbüchse 9 bewirkt aufgrund der geringeren Füllung der Schneckengänge mit Granulat bzw. Pulver eine Verringerung der Förderstösse bei höherer Frequenz, so dass eine gute Drehmomentglättung erreicht wird.

Für die einwandfreie Funktion der Förderschnecke mit genuteter Einzugsbüchse ist es wichtig, dass die Schnecke in diesem Bereich mit einer vorzugsweise gleichbleibenden, geringen Gangtiefe versehen ist. Um das zusätzliche Stegvolumen in der mehrgängigen Einzugszone zu kompensieren, ist die axiale Breite der einzelnen mehrgängigen Einzugsstege etwa halb so breit wie der eingängige Fördersteg 8. Einer der mehrgängigen Einzugsstege geht mit Änderung des Steigungswinkels in den eigentlichen breiteren Fördersteg 8 über.

**Patentansprüche**

1. Trichterstück einer Einschneckenstrangpresse mit einem Gehäuse (1) und einer dieses in axialer Richtung zumindest teilweise durchsetzenden Förderschnecke (2), die zur antreibenden Getriebewelle hin durch ein von einer gehäusefesten Buchse abgedecktes Rückfördergewinde (12) abgedichtet ist, mit einer die Förderschnecke (2) umfassenden Nutbüchse (9) mit achsparallelen, in Förderrichtung flacher werdenden Einzugsnuten (10, 11) und mit einer zur Förderschnecke (2) tangentialen, aussermittigen Einfüllöffnung (4), dadurch gekennzeichnet, dass die Nutbüchse (9) nur in ihrem in Förderrichtung der Einfüllöffnung (4) folgenden Bereich über ihren gesamten Umfang mit Einzugsnuten (10, 11) und im Bereich der Einfüllöffnung (4) nur über einen Umfangsteil mit Einzugsnuten (10) versehen ist, der nicht unterhalb der Einfüllöffnung (4) liegt.

2. Trichterstück nach Anspruch 1, dadurch gekennzeichnet, dass die Einzugsnuten (11) der Nutbüchse (9), die sich in dem Umfangssteil befinden, der sich an den unterhalb der Einfüllöffnung (4) liegenden Umfangsteil der Nutbüchse (9) in Förderrichtung anschliesst, zu der Einfüllöffnung (4) hin geschlossen sind.

3. Trichterstück nach Anspruch 1 oder 2, dadurch gekennzeichnet, dass die Förderschnecke (2) über den Bereich der flach auslaufenden Einzugsnuten (10, 11) der Nutbüchse (9) mindestens mit drei Förderstegen versehen ist.

4. Trichterstück nach einem der Ansprüche 1 bis 3, dadurch gekennzeichnet, dass die Breite der Förderstege im mehrstegigen Bereich der Förderschnecke (2) etwa nur die Hälfte der Breite des Förderstegs (8) in dem einstegigen Bereich der Förderschnecke (2) beträgt.

5. Trichterstück nach einem der Ansprüche 1 bis 4, dadurch gekennzeichnet, dass die Steigung der Förderstege im mehrstegigen Bereich der Förderschnecke (2) grösser ist als die des Förderstegs (8) in deren einstegigem Bereich.

**Claims**

1. A hopper section of a single-screw extruder comprising a housing (1) and a feed screw (2), which extends at least in part through the housing in an axial direction and is sealed from the driving gearshaft by back-conveying screw threads (12), which are covered by a bush that is fixed to the housing, which hopper section comprises a grooved bush (9), which surrounds the feed screw (2) and has feed grooves (10, 11), which are parallel to the axis and become shallower in the direction of conveyance, and an eccentric filling opening (4), which is tangent to the feed screw (2), characterized in that the grooved bush (9) is provided with feed grooves (10, 11) throughout its periphery only in that portion which in the feeding direction succeeds the filling opening (4), and the grooved bush (9) is provided adjacent to the filling opening with feed grooves (10) only in a part of its periphery, which part is not disposed below the filling opening (4).

2. A hopper section according to claim 1, characterized in that those feed grooves (11) which are formed in the grooved bush (9) in that part of its periphery which in the feeding direction immediately succeeds that part of the periphery of the grooved bush (9) that is disposed below the filling opening (4) are closed towards the filling opening (4).

3. A hopper section according to claim 1 or 2, characterized in that the feed screw (2) is provided with three flight lands adjacent to the feed grooves (10, 11) of the grooved bush (9) and taper to a flush end.

4. A hopper section according to any of claims 1 to 3, characterized in that the flight lands in the multiple-land portion of the feed screw (3) have a width which is approximately one-half of the width of the flight land (8) in the single-land portion of the feed screw (2).

5. A hopper section according to any of claims 1 to 4, characterized in that the lead of the flight lands in the multiple-land portion of the feed screw (2) exceeds the lead of the flight land (8) in the single-land portion of said screw.

**Revendications**

1. Partie de trémie d'une extrudeuse à vis unique comportant un boîtier (1) et une vis d'alimentation (2) qui traverse au moins partiellement le boîtier en sens axial et est séparée de manière étanche de l'arbre primaire d'entraînement par un filet de renvoi (12) recouvert par un manchon solidaire du boîtier, une chemise rainurée (9) entourant la vis de d'alimentation (2) ayant des rainures d'admission (10, 11) parallèles à l'axe et devenant moins profondes en direction du transport et une ouverture de remplissage (4) excentrique disposée de manière tangentielle par rapport à la vis d'alimentation (2) caractérisée en ce que la chemise rainurée (9) n'est pourvue sur toute sa circonférence de rainures d'admission (10, 11) que dans la partie se trouvant dans la direction du transport en aval de l'ouverture de remplissage (4) et la chemise rainurée est pourvue au niveau de l'ouverture de remplissage (4) seulement sur une partie de sa circonférence de rainures d'admission (10), à savoir sur celle qui ne se trouve pas au-dessous de l'ouverture de remplissage (4).

2. Partie de trémie selon la revendication 1 caractérisée en ce que les rainures d'admission (11) de la chemise rainurée (9) se trouvant dans la partie de circonférence succédant à la partie de circonférence de la chemise rainurée (9) qui se trouve au-dessous de l'ouverture de remplissage (4) en direction du transport sont fermées du côté de l'ouverture de replissage (4).

3. Partie de trémie selon la revendication 1 ou 2 caractérisée en ce que la vis d'alimentation (2) comporte au moins trois plats d'alimentation dans la partie où les rainures d'admission (10, 11) de la chemise rainurée (9) deviennent moins profondes.

4. Partie de trémie selon l'une des revendications 1 à 3 caractérisée en ce que la largeur des plats d'alimentation dans la zone dans laquelle la vis d'alimentation (2) comporte plusieurs plats n'a à peu près que la moitié de la largeur du plat d'alimentation (8) se trouvant dans la partie à un plat de la vis d'alimentation (2).

5. Partie de trémie selon l'une des revendications 1 à 4 caractérisée en ce que la hauteur de pas entre les plats d'alimentation dans la zone à plusieurs plats de la vis d'alimentation (2) est plus grande que celle du plat d'alimentation (8) dans la zone à un plat.

FIG.1

0 100 945

FIG. 2

FIG.3